# EUROPEAN PATENT APPLICATION

(11) **EP 1 161 029 A1**
(43) Date of publication of application: **05.12.2001**
(21) Application number: 01000138.6
(22) Date of filing: 03.05.2001
(51) Int. Cl.: H04L 12/24

(54) **Managing system resources**

(30) Priority: 31.05.2000 US 583710
(71) Applicant: International Business Machines Corporation, Armonk, NY 10504 (US)
(72) Inventor: SWEITZER, John W. (US Resident), SO21 2JN, Winchester (GB)
(74) Representative: Burt, Roger James, Dr.

(57) **Abstract**

A set of properties for a managed object representing a resource within a manageability model are organized into two broad groups. The first group categorizes a particular property in management terms according to a set of property category qualifiers. The property categories generally describe how the specific property is used by a management application or tool in the framework. The second group captures details about characteristics that apply to a particular category. These characteristics are defined by a set of category characteristic qualifiers, several of which include may be associated with a phase within a life cycle of the resource being modeled. Thus, in an illustrative embodiment, the first group includes the following categories: identification, configuration settings, resource consumption, measurement, status, and work or activity completed. The second group includes characteristic qualifiers such as value, changeability, latency, validity, location, life span, scope, and the like.

## Description

The present invention is directed to managing a large distributed computer network.
More particularly, the present invention is related to the field of application management in a large enterprise network.

The idea of making an information technology (IT) resource manageable is not new. Existing management approaches typically incorporate some combination of the following: defining managed objects, describing properties, identifying events, supplying commands or tasks, building monitors, or writing rules or canned knowledge. These approaches typically borrow techniques from other disciplines such as object oriented programming. While useful in their own right, it is difficult to build a management system that delivers more than an object browser for administrators. This is because known approaches do not capture enough of the intent or semantics to configure properly a management tool.

A managed object, for example, is an abstraction for a resource. Like traditional manageability models, a managed object definition typically includes details about properties, operations or methods, events, and the like. Unlike other models, however, these meta-constructs usually are organized into predefined categories so that management tools can dynamically determine the aspects of the manageability model that matters to their users. Without these categories, a management tool that attempts to interpret the manageability model may encounter a managed object (for a resource such as a buffer) with hundreds of properties, e.g., maximum queue size, queue name, number of elements in a queue, maximum experience queue size, longest duration, queue type (prior, LIFO, FIFO), log file location, last time full, storage consumed, operational state, and the like.

A pervasive practice is to distinguish between the readability and writeability of a property. These distinctions follow directly from those that programmers typically grasp. The purpose is to enable the system management framework to be able to handle questions such as: is the property read only, is the property writable, is the property only writable at object create time, and so forth? These distinctions typically are under-specified when it comes to the manageability of a resource. Consider, for example, the situation in which an application requires the name of a relational database so that it can determine where to store its data. The developers of this application may decide that this name needs to be provided when the application is installed so that the value is writable at install time and readable thereafter. Unfortunately, this designation does not enable the system management framework to determine on a global basis whether the property is a readable or writable property. As another example, suppose a property like "current number of units" is declared readable. Such a declaration does not provide a management application with sufficient information to interpret the value of the property when the installed component, for example, is stopped.

Thus, in the heterogeneous computing environment typical of the enterprise environment, the number of the attributes for a resource can number in the hundreds, each attribute potentially unique to the given resource. The number of attributes, the different types of attributes for different resources, and the individual ways in which such attributes are programmed for each resource, tend to make it difficult for the system management application to understand the exact nature of the resource and the type of management it requires. This is especially true when the properties are categorized in programmer-specific semantics.

The managed object also tends to be specific for the given resource. Not only are there quite a number of attributes, but there are also specialized methods (sometimes called "instrumentation") which to an extent duplicate the system management application functionality and must be written for each managed resource. The greater degree to which a resource must have specialized instrumentation written, the greater the expense associated with managing the resource. One of the reasons that the instrumentation tends to be more extensive than desired is that the attributes are not described uniformly in a way that the management application can understand the nature of the resource.

Therefore, it would be desirable to provide new techniques for classifying the attributes of a managed object in a system management framework to improve system management in a heterogeneous computing environment as well as to structure the system management framework in such a way as to reduce the amount of instrumentation required in a typical managed object.

This objection is met by the invention claimed in claim 1.

According to an embodiment of the invention, a set of properties for a managed object representing a resource within a manageability model are organized into two broad groups. The first group categorizes a particular property in management terms according to a set of property category qualifiers. The property categories generally describe how the specific property is used by a management application or tool in the framework. The second group captures details about characteristics that apply to a particular category. These characteristics are defined by a set of category characteristic qualifiers, several of which include may be associated with a phase within a life cycle of the resource being modeled. Thus, in an illustrative embodiment, the first group includes the following categories: identification, configuration settings, resource consumption, measurement, status, and work or activity completed. The second group includes characteristic qualifiers such as value, changeability, latency, validity, location, life span, scope, and the like.

The manageability model also integrates the notion of the resource's life cycle into the model definition. Thus, for example, the resource life cycle may include a number of representative stages: before in-hand, before installed, while installing, while binding, before operational, and while operational. In a representative embodiment, the manageability model for an object comprises a set of properties, a set of property categories into which the set of properties are organized, and at least one category characteristic for a given property category. The category characteristic includes a qualifier having values identifying phases within a life cycle of the resource. The model preferably confirms to the Desktop Management Task Force (DMTF) Common Information Model (CIM) and may be suitably expressed in Extensible Markup Language (XML).

For a better understanding of the present invention reference should be made to the following detailed description of an embodiment thereof taken in connection with the accompanying drawings, in which:
**Figure 1** illustrates a known manageability model for an information technology resource;
**Figure 2** illustrates a manageability model in more detail;
**Figure 3** illustrates a manageability model that is organized around an installable unit;
**Figure 4** illustrates the technique of the embodiment comprising organizing a resource's set of properties according to property category qualifiers;
**Figure 5** is a table illustrating the properties of a resource (namely, a buffer) into a set of categories;
**Figure 6** is a table illustrating the permitted combination of property category qualifiers and the category characteristic qualifiers according to an embodiment of the invention;
**Figure 7** illustrates a conventional DMTF Common Information Model and its associated Extensible Markup Language (XML) representation;
**Figure 8** is an illustration of a portion of a manageability model (together with corresponding XML) according to the present invention for a database server having a set of properties; and
**Figure 9** illustrates how the manageability model integrates the notion of a resource's life cycle into a method declaration for a category characteristic such as changeability.

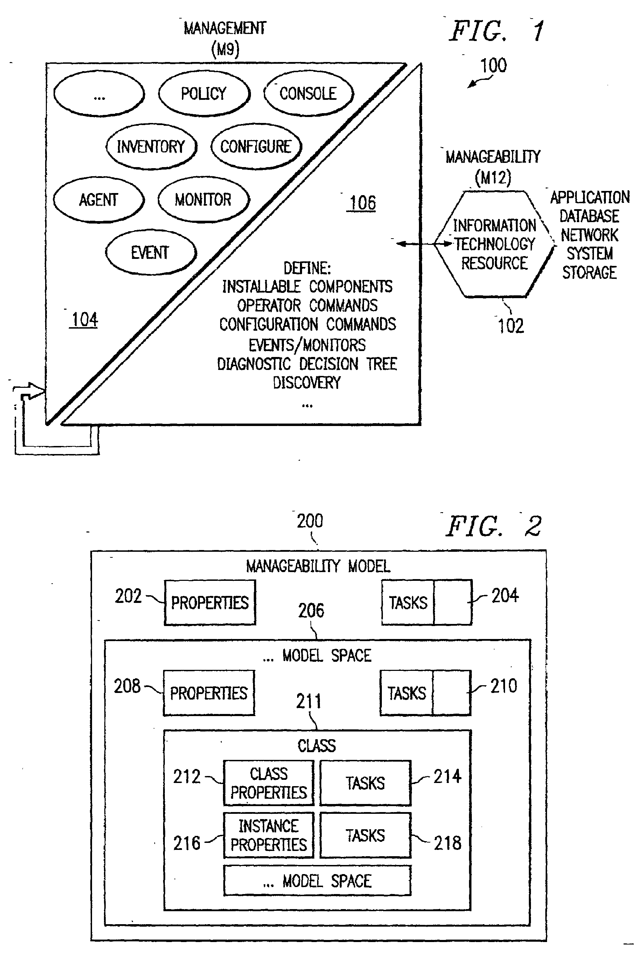

**Figure 1** illustrates a known manageability model **100** that is used to manage an information technology resource **102** such as an application, a database, a network, a system, a storage, a combination thereof, or the like. The model comprises a set of management components **104** that are configured based on manageability information **106** collected by installable components, operator commands, configuration commands, events/monitors, diagnostic decision trees, discovery, or the like in a known manner. A known management framework of this type is IBM® Tivoli® Managed Environment. Further details about this product can be obtained from the Tivoli web site at www.tivoli.com.

**Figure 2** illustrates the manageability model in more detail. As can be seen, the manageability model **200** includes a set of properties **202** and tasks **204** for the entire model expression. The model **200** includes one or more model spaces **206,** each of which includes a set of properties **208** and tasks that apply to the entire model space **206,** and a set of tasks **211.** The class **210** includes a set of class properties **212,** a set of class tasks **214,** a set of instance properties **216,** and a set of instance tasks **218.**

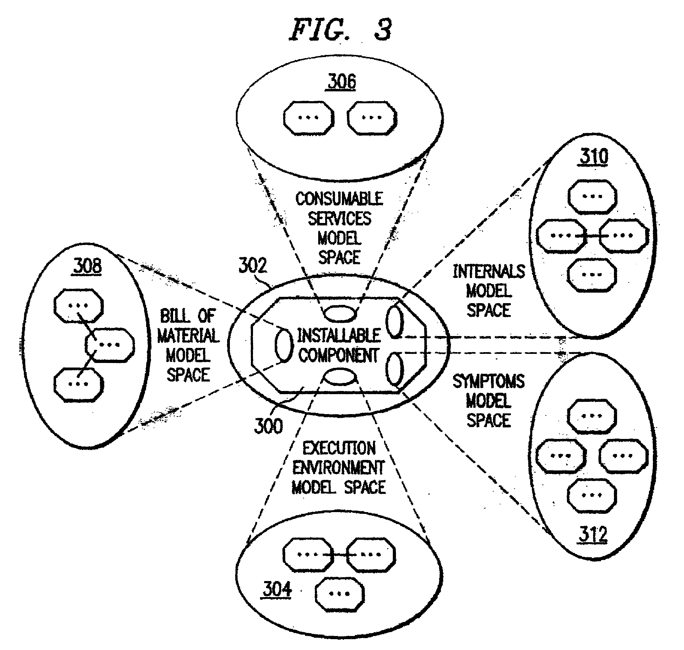

In an illustrative embodiment shown in **Figure 3,** the manageability model is organized around the notion of an installable unit **300.** In this example, an octagon represents a component. A dark oval represents situations for which model spaces are defined. The enlarged ovals contain the model for a particular model space. Model spaces can be viewed as a special type of association because they represent an association between an object and another model as opposed to an association between two objects. As a result, model spaces systematically partition the manageability model into meaningful parts that emphasize important aspects of managing a particular IT resource.

The installable unit is an abstraction that a manufacturer or supplier constructs for introducing an IT resource into an IT environment. Class definitions serve as the primary building block for capturing details in the manageability model of **Figure 3.** Preferably, the manageability model partitions managed object definitions into model spaces, which is a partition that captures a particular perspective of the reality about an IT resource. As seen in **Figure 3,** the model spaces may include a macro model space **302** that captures the details for the installable component **300.** This is what can be installed into or de-installed from an environment. An execution environment model space **304** captures the dependencies the installable component has on its hosting environment. These are the characteristics or the services the installable component requires from its environment to deliver the services it provides. A consumable services model space **306** details the services or capabilities the installable unit can provide for other IT resources. The bill of materials model space **308** captures details about the IT resources an installable created in an environment for the installable component, e.g., the files for given software code. An internals model space **310** captures the details about the internals of the installable component. Finally, a symptoms model space **312** captures details about problems with respect to the installable component that have specific diagnostic aids. With this organization, management tools can easily transition between different levels of management. For example, a software distribution tool can deal with the macro model space **302** and the details in the bill of materials model space **308,** while a resource-specific diagnostic tool deals with the details in the internals model space **310.** The execution environment, consumable services, bill of materials, internals, and symptom model space details are typically contained with an installable managed object definition.

Each model space contains a set of managed object definitions and instances. Both the definitions and instances are preferably expressed using the syntax and semantics of the Distributed Management Task Force's (DMTF's) Common Information Model (CIM). Therefore, the models within a particular model space can be expressed in terms of classes, associations, and properties. The CIM meta model provides a convenient way to express additional semantics through qualifiers. As is known, the CIM model include a set of class level qualifiers that can be used for expressing limits imposed on the number of instances of a particular class, for identifying the stages in the life cycle in which a class (association) instance can be created, for identifying the stages in the life cycle in which a class (association) instance can be destroyed, and the like.

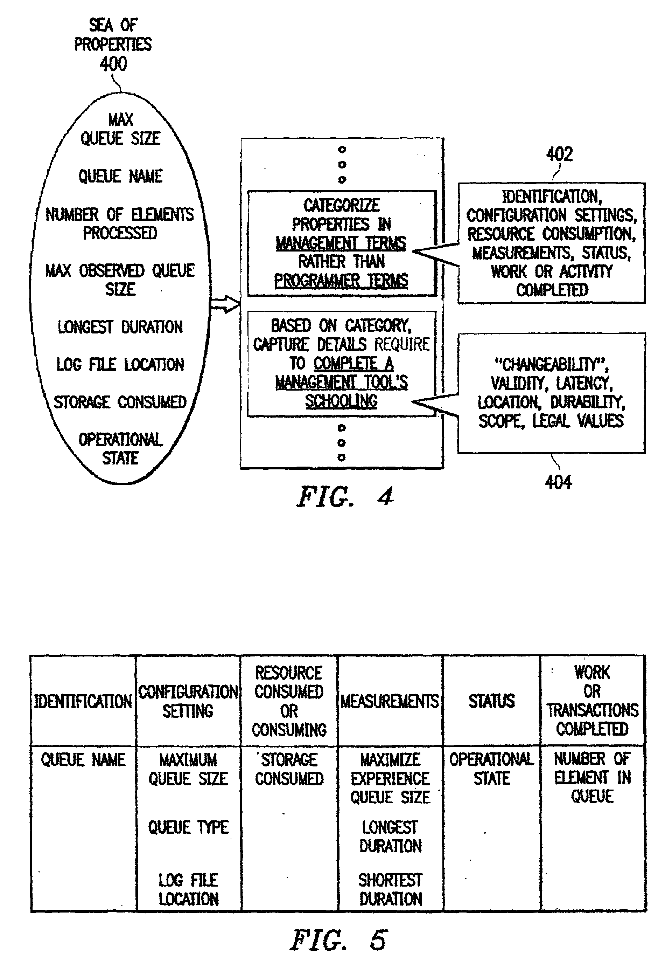

While the CIM meta model provides a meaningful base, it would be desirable to augment the model to more completely declare the manageability of a resource. The present invention achieves this goal by organizing properties and characteristics of the properties within the manageability model in a novel way. **Figure 4** illustrates this process for a set of properties **400** for a given managed resource. The managed resource in this example is a buffer having a set of properties such as: maximum queue size, queue name, number of elements processed, maximum observed queue size, longest duration, log file location, storage consumed, operational state, and the like. Of course, this properties set is merely representative as a given managed object may have many more properties. According to the invention, the set of properties within the manageability model for a managed object representing a resource are organized into two broad groups. The first group **402** categorizes a particular property in management terms (as opposed to, for example, programmer-type terms) according to a set of property category qualifiers. The property categories generally describe how the specific property is used by a management application. Thus, for example, for identification purposes, for measurement, for status, and the like. The second group **404** captures details about characteristics that apply to a particular category. These characteristics are defined by a set of category characteristic qualifiers, several of which include may be associated with a phase within a life cycle of the resource being modeled. Thus, in the illustrative embodiment of **Figure 4,** the first group **402** includes the following categories: identification, configuration settings, resource consumption, measurement, status, and work or activity completed. The second group **404** includes characteristic qualifiers such as value, changeability, latency, validity, location, life span, scope, legal values, and the like.

According to the invention, a set of property category qualifiers (e.g., identification, configuration setting, and the like) identify the type of management information captured by a particular property while a set of category characteristic qualifiers identify characteristics of the property categories. As can be seen, the categories (which are merely representative) are selected and defined in such a way as to be helpful in understanding the nature of the property. Thus, for example, the identification category includes the properties that uniquely identify a managed object within a particular context or scope. A configuration setting category includes properties that change the functionality of the managed object or that adapt the managed object to its environment. The resource consumption category identifies the properties that record information about the resource being consumed by a managed object. The status category includes the properties that help a management tool to assess a managed object's ability to deliver the service(s) it supports. The measurements (or quality of service) category includes the properties that represent the service the component is providing that are appropriate for service level agreements, and the work or activity completed category includes properties that record statistics about activities performed or completed by the IT resource represented by the managed object.

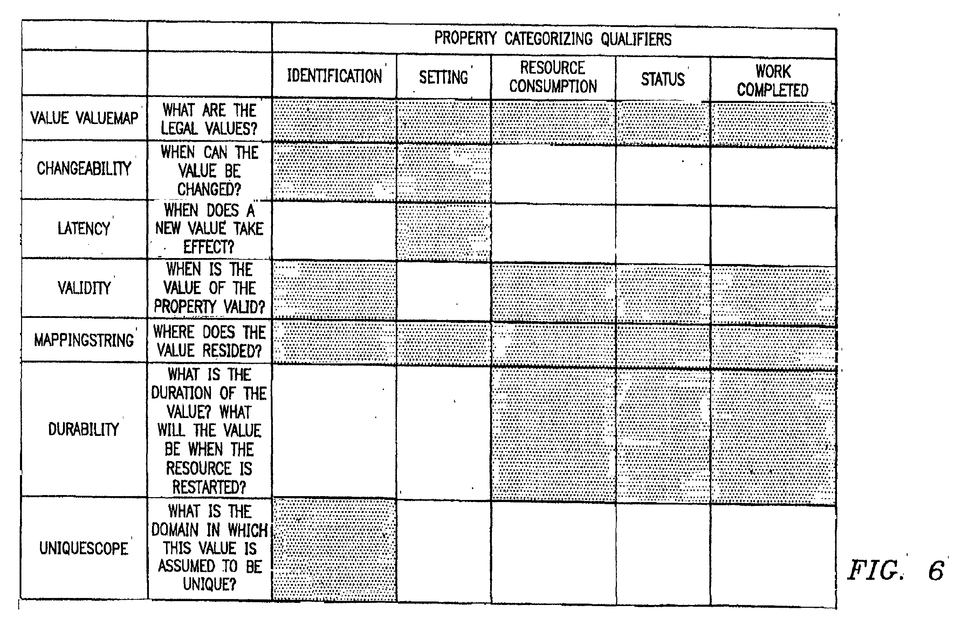

Preferably, all properties of the managed object are categorized so that a category qualifier can be specified by every property. **Figure 5** illustrates a table that reorganizes the buffer's set of properties into the above-described categories. In this example, the queue name property is identified in the identification category, the maximum queue size, queue type and log file location properties are identified in the configuration setting category, the storage consumed property is identified in the resource consumed category, the maximum experience queue size, longest duration and shortest duration properties are included in the measurements category, the operational state property is included within the status category, and the number of elements in queue property is included in the work or transactions completed category.

Thus, according to the invention, a property category qualifier identifies the type of management information captured by a particular property, while a category characteristic qualifier provides further detail about the values a particular property may hold. Thus, for example, a value qualifier may be used to restrict the values a particular property can hold. A changeability qualifier may be used to specify when a property can be changed (e.g., via a set operation) based on a resource life cycle. A validity qualifier may be used to specify when in the resource's life cycle the value of a property can be obtained (e.g., via a get operation). A latency qualifier may be used to specify when a value change takes effect (e.g., whether or not the resource needs to be restarted before a configuration setting takes effect. A durability qualifier can be used to specify the duration of a value of a property (e.g., what the value will be when the resource is re-started. A location (or mapping string) qualifier may be used to identify the location of a particular property, e.g., by identifying a lookup mechanism. With this qualifier, a management tool should be able to determine how to change or retrieve a value for the property. Of course, the above are merely representative.

The table in **Figure 6** shows the valid combination of property category qualifiers and the category characteristic qualifiers according to one embodiment of the present invention. For each property category qualifier (in a column), a cell is shaded if it is legal to specify a particular characteristic qualifier (in a row). When an intersecting cell is not shared, a property category qualifier and a category characteristic qualifier are mutually exclusive.

The following is a detailed specification of the category characteristic qualifiers in an illustrative embodiment:

### QUALIFIER: VALUEMAP and VALUE

The Valuemap and Value qualifiers are used to restrict the values a particular property can hold. These qualifiers are taken directly from the DMTF CIM specification.

| | | | | |
|---|---|---|---|---|
| VALUEMAP | NULL | Property | STRING ARRAY | Defines the set of permissible values for this property. The ValueMap can be used alone, or in combination with the Values qualifier. When used in combination with the Values qualifier, the location of the property value in the ValueMap array provides the location of the corresponding entry in the Values array. ValueMap may only be used with string and integer values. The syntax for representing an integer value in the ValueMap array is: [+\|-]digit[*digit] The content, maximum number of digits and represented value are constrained by the type of the associated property. For example, uint8 may not be signed, must be less than four digits, and must represent a value less than **256.** |
| VALUES | NULL | Property | STRING ARRAY | Provides translation between an integer value and an associated string. If a ValueMap qualifier is not present, the Values array is indexed (zero relative) using the value in the associated property. If a ValueMap qualifier is present, the Values index is defined by the location of the property value in the ValueMap. |

### QUALIFIER: CHANGEABILITY

The changeability qualifier specifies the points in a resource's life cycle when the value of a property can be changed. The following table specifies this qualifier:

| **QUALIFIER** | **DEFAULT** | **APPLIES** **TO** | **TYPE** | **MEANING** |
|---|---|---|---|---|
| CHANAGEABILITY | null | Property | STRING ARRAY | This qualifier identify the points in a resource's life cycle when the value of a property can be changed. The string values must be one of the following: **"When-Manufactured"** - **"Before-In-Hand" -** Can only be changed by the manufacture. **"Before-Installed" -** Can only be changed by installation. "**While-Installing**" - "**While-Binding**" - "**Before-Operational**" - "**While-Operational**" - "**While-In-Use**" - **Usage Rule:** See **Figure 6** |

### QUALIFIER: VALIDITY

As noted above, the validity qualifier specifies when in the resource's life cycle the value of a property can be used (get operation). This qualifier may be specified as follows:

| **QUALIFIER** | **DEFAULT** | **APPLIES** **TO** | **TYPE** | **MEANING** |
|---|---|---|---|---|
| VALIDITY | Null | Property | STRING ARRAY | This qualifier helps a management tool know when it can make decisions based on the value of the property. Allowable values are: **"Before-In-Hand" -** Can only be changed by the manufacture. **"Before-Installed" -** Can only be changed by installation. **"While-Installing" -"While-Binding"** **_" Before-Operational" -"While-Operational" - "While-In-Use" -** **Usage Rule:** See **Figure 6** |
| Qualifier VALIDITY : String [], Scope(property ), Flavor(); | | | | |

### QUALIFIER: LATENCY

The Latency qualifier specifies when the value change takes effect. This qualifier may be specified as follows:

| **QUALIFIER** | **DEFAULT** | **APPLIES** **TO** | **TYPE** | **MEANING** |
|---|---|---|---|---|
| LATENCY | "Immediate " | Property | String | This qualifier provides a management tool with information about when a change operation takes effect. Allowable string values are: **"Immediate" -** Upon return. **"When Started"** - When the resource is re-started. "Delayed" - After a reasonable amount of time. **Usage Rule:** See **Figure 6.** |
| Qualifier Latency : String = "Immediate", Scope(property ), Flavor (); | | | | |

### QUALIFIER: DURABILITY:

The Durability qualifier specifies the duration of a value of a property. This qualifier may be specified as follows:

| **QUALIFIER** | **DEFAULT** | **APPLIES** **TO** | **TYPE** | **MEANING** |
|---|---|---|---|---|
| DURABILITY | "Permanent" | Property | String | The value of this qualify lets the management tools know how long a value change is maintained. Allowable values are: **"Permanent"** **"Until Stopped"** **Usage Rule:** See **Figure 6.** |
| Qualifier durability : String = "Permanent", Scope(property ), Flavor(); | | | | |

### QUALIFIER: UNIQUENESS SCOPE

| **QUALIFIER** | **DEFAULT** | **APPLIES** **TO** | **TYPE** | **MEANING** |
|---|---|---|---|---|
| UNIQUENESSCO PE | "Within-Mod elspace" | Property | String | The value of this qualifier helps a management tool understand the uniqueness scope of identifiers. Allowable values are: **"Execution Environment" "Within-License" "Within-Enterprise" "Universally" "Within-Modelspace" "Within-Vendor"** - The id is unique for the resource type provided by a particular vendor. Assumed to be within a product type or product line. **Usage Rule:** See **Figure 6.** **Usage Rule:** At least one of the following qualifiers must be specified. **Usage Rule:** The category characteristic qualifiers that must be specified with this qualifier are: xxxx |
| Qualifier UniquenessScope : String = "Within-Modelspace", Scope(property ), Flavor(); | | | | |

### QUALIFIER: MAPPINGSTRING

The MAPPINGSTRING qualifier identifies the location of a particular property by providing the look up mechanism.

| | | | | |
|---|---|---|---|---|
| MAPPING STRINGS | NULL | Class, Property, Association , Reference | STRING ARRAY | A mapping string for a given provider or agent. **Usage Rule:** See **Figure 6.** |

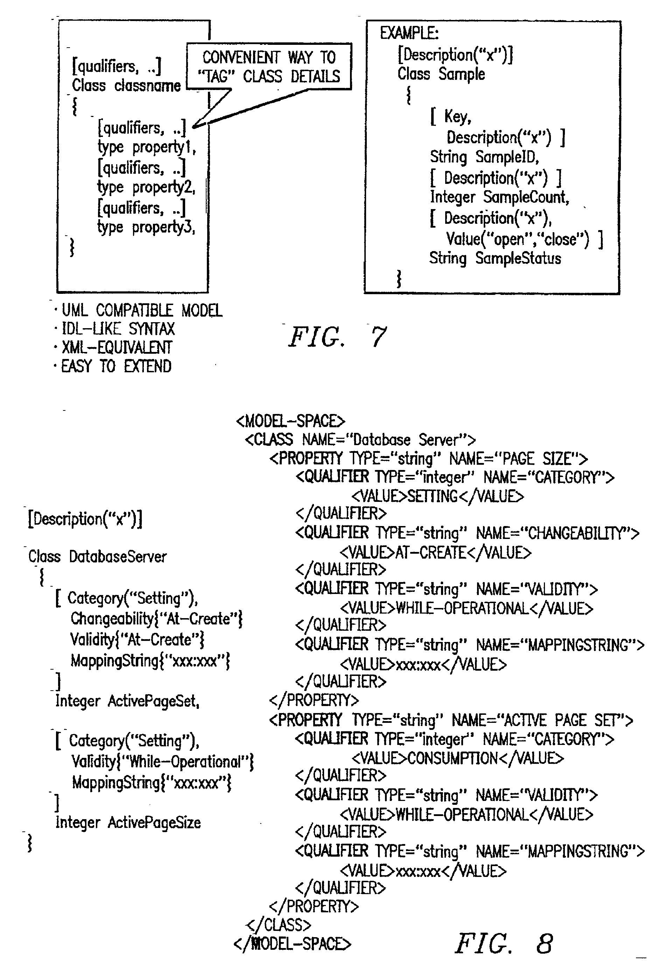

As noted above, the present invention may take advantage of the DMTF Common Information Model initiative. **Figure 7** illustrates the CIM meta model construct and its associated Extensible Markup Language (XML) representation. **Figure 8** illustrates how this model is then used to create a manageability model for a database server resource (called DatabaseServer) according to the present invention. As seen in this figure, the managed object class called DatabaseServer has a number of properties including page size, and active page set. The property qualifier for the page size property indicates that its category is setting and that the property includes a number of category characteristic qualifiers, in this case changeability, validity, and mapping string. Those qualifiers were identified above. Another property, called active page set, is also within the setting property and includes its own set of category characteristic qualifiers, namely validity and mapping string. In the case of the page size property, however, the validity qualifier is "at create" whereas the validity qualifier for the active page set property has a validity qualifier "while operational." **Figure 8** also illustrates corresponding XML for this portion of the manageability model.

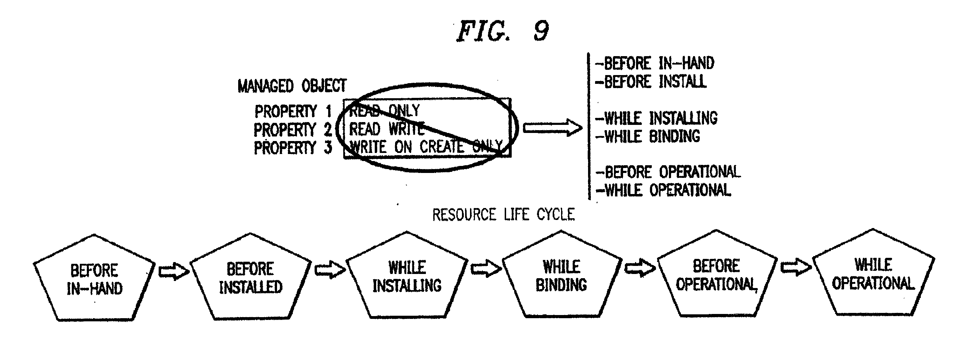

As described briefly above, the manageability implied by a method declaration is somewhat obtuse without an explicit understanding of when it is legal to execute the operation. Thus, for example, it does not make sense to invoke a "return memory utilization" task when the IT resource is not operational. The manageability model solves this problem by integrating the notion of the resource's life cycle into the model definition such as illustrated in **Figure 9.** As seen in this illustration, the resource life cycle includes a number of representative stages: before in-hand, before installed, while installing, while binding, before operational, and while operational. These attributes may be selectively set by different parties, e.g., a vendor, an administrator, or a user. Thus, taking the example of a buffer as the managed resource, the size of the buffer (which is a property) may be different at different points in the resource's life cycle.

As described above, given category characteristics have associated string values that define how the qualifier may be applied to the given property. Thus, in the changeability characteristic, the qualifier therefor may be set to a string value such as "when manufactured," "before-in-hand," "while-binding" and the like. The validity characteristic qualifier has similar string values. The latency characteristic qualifier also includes life cycle-specific values such as "immediate," "when started," "delayed" and the like. In this manner, the manageability model provides a much more comprehensive view of the resource. In particular, the model includes such temporal-specific descriptions as when an attribute can be changed by a management application/tool and the latency of the attribute change. In addition to specifying timing issues, the model may also include a qualifier for location, i.e. a description of where within the network an attribute can be changed, a qualifier for scope, i.e. the effective extent of an attribute value, and a qualifier for life span, i.e. how long an attribute value lasts one it is set.

With this additional information in the attributes, additional instrumentation in each of the managed objects can be avoided. This provides significant advantages over the prior art, wherein specialized methods typically must be written for each managed resource. Because the manageability model does not require instrumentation, the model is essentially "operationless," which reduces the complexity of the model in design and use.

One of ordinary skill in the art will appreciate that the manageability modeling techniques of the present invention may be implemented within any known or later-developed system management framework. As is well known, a system management framework manages system resources identified by managed objects. In a representative embodiment of the invention that has been described, properties of a given resource are categorized into a set of property categories, with each property category identifying, for example, how the property is used by the management application or tool. Given category characteristics are then applied to the property categories. The system resources are then managed using the manageability model by the system management framework. In the preferred embodiment, the category characteristics describe how the defined property might vary during the resource's life cycle, as well as other characteristics such as location, scope and life span. The property and characteristic qualifiers provide a much more robust manageability model for the IT resource as compared to the prior art.

One of ordinary skill in the art will appreciate that the manageability model as has been described above provides significant advantages when managing an object representing a resource. As has been described, the model facilitates the classification of attributes of the object according to phases of a life cycle of the resource. During a given management operation, the operational state of the resource may then be identified and used to apply a given constraint to a management operation. Thus, for example, the operational state of the resource may indicate that a given operation cannot then be carried out, e.g., because the resource is not yet installed. In such case, the given constraint restricts a system management application or tool from performing a given action. Stated another way, the given constraint only permits the system management application or tool to perform the action during a given phase of the life cycle of the resource.

The manageability model may be created using conventional software. A particular implementation of the model, as has been described, uses XML to represent the model, although this is not a requirement of the present invention. Such software, together with the system management framework and management tools, are typically implemented as computer programs executable by a processor on a given machine or machines. One of the preferred implementations of such software is as a set of instructions in a code module resident in the random access memory of a computer. Until required by the computer, the set of instructions may be stored in another computer memory, for example, in a hard disk drive, or in a removable memory such as an optical disk (for eventual use in a CD ROM) or floppy disk (for eventual use in a floppy disk drive), or even downloaded via the Internet.

The manageability modeling techniques of the invention may be practiced for a single managed object or many such objects in a large distributed enterprise. One such enterprise is a Tivoli Managed Environment that includes computing resources organized into one or more managed regions, each region being managed by a management server servicing one or more gateway machines, with each gateway machine servicing a plurality of endpoint machines. In that environment, a system management framework is preferably "distributed" on the gateway machines and the one or more endpoint machines to carry out system management tasks. Although the above environment is preferred, one of ordinary skill will appreciate that the inventive concepts may be implemented in smaller distributed client server network environments. Thus, the invention should not be construed to be limited to a particular large scale, distributed computing environment.

In addition, although the various methods described are conveniently implemented in a general purpose computer selectively activated or reconfigured by software, one of ordinary skill in the art would also recognize that such methods may be carried out in hardware, in firmware, or in more specialized apparatus constructed to perform the required method steps.

## Claims

1. A method of managing system resources identified by managed objects in a system management framework, comprising:
categorizing resource properties into a set of property categories, wherein each property category identifies types of management information;
classifying characteristics of each managed object into the property categories; and
managing the system resources using the set of property categories.

2. The method claimed Claim 1 wherein the property category qualifiers include at least one of an identification category, a resource consumption category, a configuration setting category, a status category, a quality service category and an activity category.

3. The method as described in Claim 2 wherein the identification property includes at least one property that uniquely identifies a system resource being represented by a managed object within a particular context.

4. The method claimed in Claim 2 wherein configuration setting category includes at least one property that changes a function of a system resource represented by a managed object.

5. The method claimed in Claim 2 wherein the resource consumption category includes at least one property that records information about a resource being consumed by a system resource represented by a managed object.

6. The method claimed in Claim 2 wherein the status category includes a property that identifies a status of a managed object.

7. The method claimed in Claim 2 wherein the quality of service category includes a property representing a service level provided by a system resource represented by a managed object.

8. The method claimed in Claim 2 wherein the activity category includes a property that records information about activities performed by a system resource represented by a managed object.

9. The method claimed in Claim 1 wherein the characteristics are classified into the property categories using a database schema.

10. The method claimed in claim 1, comprising identifying phases of a life cycle of a given system resource and classifying the characteristics of each managed object into the property categories according to the life cycle phases.

11. The method claimed in Claim 10 wherein the step of managing the system resources includes restricting a system management application from performing a given function except during a given phase of the life cycle of a given system resource.

12. A computer program product in a computer-useable medium for managing system resources identified by managed objects in a system management framework, comprising:
code for categorizing resource properties into a set of property categories, wherein each property category identifies types of management information;
code for classifying attributes of each managed object into the property categories; and
code managing the system resources using the set of property categories.
